# EUROPÄISCHE PATENTSCHRIFT

(11) **EP 2 465 755 B1**
(45) Veröffentlichungstag und Bekanntmachung des Hinweises auf die Patenterteilung: **26.08.2015**
(21) Anmeldenummer: 11009793.8
(22) Anmeldetag: 12.12.2011
(51) Int. Cl.: B62D 25/20, B60R 22/22

(54) **Vorrichtung zur Anbringung eines Personenrückhaltesystems mit einer Sicherheitsgurtanordnung sowie Bodenplatte eines Fahrzeugs**
Device for applying a personal restraint system with a safety belt and base plate of a vehicle
Dispositif d'application d'un système de retenue de personnes doté d'un agencement de ceinture de sécurité et panneau de sol d'un véhicule

(30) Priorität: 20.12.2010 DE 102010055198
(43) Veröffentlichungstag der Anmeldung: 20.06.2012
(73) Patentinhaber: AGUTI PRODUKTENTWICKLUNG & DESIGN GMBH, 88085 Langenargen (DE)
(72) Erfinder: Grieger, Michael, 88079 Kressbronn (DE)
(74) Vertreter: Otten, Roth, Dobler & Partner

(56) Entgegenhaltungen:
- EP-A1- 2 239 128
- WO-A1-01/30638
- WO-A1-2006/114525
- WO-A2-2009/012917
- DE-A1- 4 208 150
- DE-A1- 19 708 404

## Beschreibung

### Stand der Technik:

Für Anordnungen zur Anbringung von Personenrückhaltesystemen mit einer Sicherheitsgurtanordnung in Fahrzeugen kommen Einbauten wie beispielsweise Gestelle aus Stahl im oder am Fahrzeug zum Einsatz, beispielsweise Gurtgestelle für Personensitzanordnungen. Derartige Einbauten werden im Fahrzeug an Stütz- bzw. Gegenabschnitten befestigt beispielsweise an oder im Bereich einer Bodenplatte und/oder einer Seitenwand bzw. eines Daches des Fahrzeuges. Die Befestigung der Einbauten kann z. B. durch Verschrauben und/oder Verschweißen oder anderweitig erfolgen. An der Anordnung kann das Personenrückhaltesystem bzw. die Sicherheitsgurtanordnung aufgenommen werden. Zum Beispiel können Komponenten wie Gurtaufroller, Gurtumlenker, Gurtfixierungen oder Gurtschlösser fest positioniert werden.

Die betreffenden Einbauten samt der Befestigungen am Fahrzeugstützabschnitt müssen für die möglichen auftretenden Belastungen, zum Beispiel bei einem Unfall mit über das Personenrückhaltesystem im Fahrzeug gesicherten Personen, ausgelegt und ausreichend fest und mechanisch stabil sein. Außerdem darf der Stützabschnitt am Fahrzeug im Bereich der Befestigung der Anordnung nicht versagen, wobei die betreffenden Gegenabschnitte am Fahrzeug die einwirkenden bzw. eingeleiteten Kräfte bzw. Momente zerstörungsfrei aufnehmen müssen.

Im Belastungsfall können Belastungen von beispielsweise mehreren Tonnen an einer Anordnung bzw. einer belasteten Einheit wie zum Beispiel an einem Gurtgestell eines Fahrzeugsitzes bzw. einer Sitzbank für Personen auftreten.

Die WO 01/30638 A1 betrifft eine Säulenstruktur einer Fahrzeugkarosserie mit einer Mittelsäule, an der eine Anschnallgurtankerklammer aufgenommen ist.

Aus der EP 2 239 128 A1 ist ein Fahrzeugteil wie eine B-Säule eines Kraftfahrzeugs bekannt, mit einem Strukturverstärkungsteil, welches in Kunststoff eingebettete Fasern umfasst.

Die DE 42 08 150 A1 schlägt eine Rückenlehne für einen Fahrzeugsitz vor, mit einer Tragstruktur aus faserverstärktem Kunststoff mit mindestens zwei Biegeträgern, die einen Hohlquerschnitt aufweisen.

Einen Sitzrahmen mit hohlen Abschnitten, welche mit einem Schaumstoff verstärkt sind, thematisiert die WO 2009/012917 A2.

### Aufgabe und Vorteile der Erfindung:

Aufgabe der vorliegenden Erfindung ist es, Fahrzeuge und Vorrichtungen der einleitend skizzierten Art so zu verbessern, dass sowohl technische als auch wirtschaftliche Gesichtspunkte vorteilhaft berücksichtigt sind. Dabei sollen auch indirekte Effekte Berücksichtigung finden.

Diese Aufgabe wird durch die unabhängigen Ansprüche gelöst. Die abhängigen Ansprüche betreffen vorteilhafte Weiterbildungen der Erfindung.

Die Erfindung geht aus von einer Vorrichtung zur Anbringung eines zur Sicherung von Personen in einem Fahrzeug ausgebildeten Personenrückhaltesystems mit einer Sicherheitsgurtanordnung, wobei die Vorrichtung für eine Anbindung an einem Stützabschnitt des Fahrzeugs, insbesondere an einer Bodenplatte, ausgestaltet ist. Die Vorrichtung kann insbesondere vorteilhaft als ein Basis- bzw. Gurtgestell ausgestaltet sein. Ein Basis- bzw. Gurtgestell kann in der Art einer Grundstruktur für eine Sitzanordnung dienen, so dass zum Beispiel weitere Elemente der Sitzanordnung daran anbaubar sind, wie z. B. Verkleidungselemente oder Sitz- und Rückenpolster und dergleichen.

Der Kern der Erfindung liegt darin, dass wesentliche Abschnitte der Vorrichtung aus einem plattenartigen Verbundmaterial gebildet sind, das eine mit Kammern gebildete Innenstruktur umfasst, wobei ein flächiges Abdeckelement eine Außenseite des Verbundmaterials bildet. Das Abdeckelement ist insbesondere integral am Verbundmaterial vorhanden bzw. mit der Innenstruktur verbunden. Die offenen Seiten der Kammern sind jeweils von Innenseiten der Abdeckelemente abgedeckt.

Das Verbundmaterial kann individuell für den jeweiligen Einsatzzweck angepasst hergestellt werden oder vorgefertigt z. B. als Standardware bereitgestellt werden was Aufbau, Größe oder Form angeht, insbesondere als rechteckförmige Bauplatte.

Der wesentliche Vorteil des erfindungsgemäßen Verbundmaterials besteht darin, dass es trotz vergleichsweise geringem Materialeinsatz höchste Stabilitätswerte zeigt. Die Stabilität des erfindungsgemäßen Verbundmaterials drückt sich insbesondere in einer vergleichsweise sehr hohen Druck- und Zugbelastbarkeit und/oder in einer höchsten Biege- und/oder Torsionssteifigkeit aus. Damit lassen sich gegenüber Anordnungen, die im Wesentlichen aus einem Massivmaterial bzw. einheitlich aus einem Eisenstahl- bzw. Blechmaterial gestaltet sind, zum Beispiel durch Umformen von Blechplatten, hohe Gewichtseinsparungen erzielen. Das Verbundmaterial ist bei vergleichbaren oder besseren sonstigen technischen Eigenschaften deutlich leichter, ggf. bis 50% leichter.

Die Kammern der Innenstruktur sind insbesondere regelmäßig angeordnet bzw. gleichförmig gestaltet und beidseitig bzw. endseitig jeweils offen, z. B. röhrenartig.

Die Innenstruktur und das Abdeckelement können bevorzugt direkt miteinander oder ggf. unter Zwischenlage einer Zwischenkomponente verbunden sein. Die Kammern können als Hohlkammern ausgestaltet sein.

Die Kammern weisen in der Regel eine Längserstreckung auf, die quer zu flächigen Hauptseiten des Abdeckelements ausgerichtet ist. So kann z. B. eine Klebeverbindung zwischen Stirnseiten der Wandungen der Kammern an einer Kammer-Stirnseite an Gegenabschnitten der betreffenden flächigen Hauptseite des Abdeckelements in Anlage kommen.

Mit der gegenüber bekannten Anordnungen erreichbaren Gewichtseinsparung der erfindungsgemäßen Vorrichtung kann im eingebauten Endnutzungszustand im Fahrzeug mit der damit einhergehenden Gewichtsreduzierung des Fahrzeugs ein entsprechend geringerer Kraftstoffverbrauch gegenüber bisherigen Anordnungen erreicht werden. Dies ist auch im Hinblick auf einen damit verbundenen verringerten Ausstoß von umweltrelevanten Abgasen bzw. Treibhausgasen bzw. als Beitrag zum Umwelt- bzw. Klimaschutz vorteilhaft.

Weiter wird vorgeschlagen, dass das Verbundmaterial gegenüberliegende Abdeckelemente umfasst, zwischen denen die Innenstruktur angeordnet ist. So kann das Verbundmaterial als Dreischicht- bzw. Sandwichaufbau gestaltet sein. Die Stabilität des Verbundmaterials lässt sich bei einem Einsatz von vergleichsweise geringen Werkstoffmengen damit weiter erhöhen.

Insbesondere sind beide Hauptseiten der Innenstruktur bzw. beide offene Stirnseiten der Vielzahl von Kammern der Innenstruktur mit jeweils einem gleichartigen Abdeckelement abgedeckt bzw. abgeschlossen. Ein so gebildetes dreilagiges Verbundmaterial kann im einfachen Fall insbesondere lediglich zwei Abdeckelemente außen und eine dazwischen liegenden Innenstruktur aufweisen.

Es ist jedoch nicht ausgeschlossen, dass mehr als drei Lagen vorhanden sind bzw. zum Dreilagenaufbau weitere Schichten an dem Verbundmaterial hinzukommen beispielsweise eine weitere Innenstruktur mit außen einem weiteren Abdeckelement. Ein solches mehrschichtiges erfindungsgemäßes Verbundmaterial ist insbesondere noch stabiler.

Grundsätzlich lässt sich im Hinblick auf die Stabilität des Verbundmaterials bzw. bezüglich der Dicke der Einzelkomponenten, wie der Innenstruktur und der Abdeckelemente, ein entsprechendes Verbundmaterial individuell auf gewünschte Anforderungen insbesondere auf gewünschte mechanische Bauteilwerte oder Geometrien abstimmen.

Auch ist es nicht ausgeschlossen, dass die erfindungsgemäße Anbringungsvorrichtung durch Kombination mit weiteren Materialien bzw. Bauelementen speziell auf einen gewünschten Endzustand abgestimmt hergestellt wird. Beispielsweise sind Beschichtungen oder andere zusätzliche Bauelemente an dem erfindungsgemäßen Gegenstand anbringbar, wie zum Beispiel Folien, Gewebe und dergleichen.

Bevorzugt weist die Innenstruktur einheitliche Kammern mit definiert vorgegebener Kammerform auf. Insbesondere sind benachbarte Kammern durch eine gemeinsame Wandung getrennt. So lässt sich beispielsweise in der Art einer Waben- oder einer Röhrenstruktur die Innenstruktur bilden. Hierfür sind bevorzugt gleichmäßig geformte beispielsweise Drei-, Vier-, Fünf- oder Sechskant-Strukturen, was die Querschnittsform der Kammerwandungen angeht, vorteilhaft.

Das Abdeckelement und die Innenstruktur bestehen bevorzugt aus dem gleichen Material. Dies ist insbesondere im Hinblick auf die Herstellung vorteilhaft. Außerdem werden damit andernfalls mögliche Spannungen zwischen unterschiedlichen Materialien im Verbundmaterial aufgrund von Temperatureinflüssen auf die unterschiedlichen Materialien vermieden.

Vorteilhafterweise ist die Innenstruktur bzw. sind die Wandungen der Kammern der Innenstruktur aus dem gleichen Material und/oder gleichartig gestaltet wie das Abdeckelement.

In Sonderfällen können auch unterschiedliche Materialien für das Abdeckelement und die Innenstruktur bzw. die Wandungen der Kammern vorteilhaft sein.

Weiter ist es bevorzugt, dass die Innenstruktur und/oder das Abdeckelement auf einem Zellulosematerial basiert. Zellulose ist ein umweltfreundlicher und preisgünstiger Rohstoff und steht weltweit zur Verfügung. Insbesondere ist es vorteilhaft, wenn die Innenstruktur und/oder das Abdeckelement aus einem Papier- bzw. Kartonmaterial gebildet sind. Ein Papier- bzw. Kartonmaterial ist z. B. durch Recycling vorteilhaft herstellbar.

Außerdem ist die Verarbeitung bzw. Herstellung von unterschiedlichsten auch komplizierten Formen und Strukturen der Innenstruktur und/oder des Abdeckelements aus Zellulosematerial vorteilhaft und kostengünstig möglich.

In einer vorteilhaften Modifikation des Erfindungsgegenstandes basiert die Innenstruktur und/oder das Abdeckelement auf einem Metallmaterial, insbesondere auf einem Leichtmetallmaterial. Hier ist insbesondere ein Material auf Aluminiumbasis vorteilhaft. Aluminium ist leicht und chemisch und mechanisch vergleichsweise stabil. Aluminium kann zudem im Gussverfahren verarbeitet werden, womit eine Vielzahl von Strukturen und Formen der Innenstruktur und/oder des Abdeckelements wirtschaftlich realisierbar sind. Des Weiteren kann die Stabilität bzw. mechanische maximale Belastbarkeit der erfindungsgemäßen Anbringungsvorrichtung gegenüber aus anderen Materialien hergestellten Anordnungen erhöht werden.

Grundsätzlich sind neben Aluminium auch andere Leichtmetallmaterialien, auf denen die Innenstruktur bzw. das Abdeckelement basiert, vorteilhaft einsetzbar. Auch Kombinationen von verschiednen Metall- und/oder Nichtmetall-Materialien sind denkbar.

Es ist überdies vorteilhaft, dass die Innenstruktur und/oder das Abdeckelement als ein mit einem Kunststoff getränktes Material ausgebildet ist. Insbesondere kann beispielsweise ein auf Zellulosematerial gebildetes Bauteil, welches die Innenstruktur bzw. das Abdeckelement bildet, und welches ohnehin eine gewisse Porosität aufweist, vorteilhaft und problemlos mit einem Material getränkt werden, beispielsweise mit einem Kunststoffmaterial auf Basis eines Harzes. Vorteilhafterweise sind insbesondere harzgetränkte Pappmaterialien bzw. Kartonmaterialien hier vorteilhaft einsetzbar. Solche Materialkombinationen ermöglichen eine variable und gezielte Anpassung und Verbesserung der Eigenschaften der erfindungsgemäßen Vorrichtung.

Als geeignetes Mittel zum Tränken von Kartonmaterial sind insbesondere flüssige Stoffe, die aushärten können, wie beispielsweise Kunstharze zum Beispiel auf Polyurethanbasis vorteilhaft.

Weiter ist es vorteilhaft, dass einzelne oder sämtliche Kammern innen ein Füllmaterial aufweisen. Die Kammern lassen sich vorteilhafterweise auch später im Herstellprozess mit dem Füllmaterial füllen, beispielsweise dann, wenn das wenigstens eine Abdeckelement bereits einseitig an die Innenstruktur anschließt. Insbesondere ist es vorteilhaft, dass mit diesem Füllmaterial weitere vorteilhafte Eigenschaften des Verbundmaterials realisierbar sind. Insbesondere kann beispielsweise eine Dämmwirkung des Verbundmaterials und/oder die Stabilität verbessert werden. Bevorzugt sind sämtliche Kammern komplett ausgefüllt mit einem entsprechenden Füllmaterial. Es ist jedoch nicht ausgeschlossen, dass nicht sämtliche bzw. nur einzelne Kammern mit einem Füllmaterial gefüllt sind. Auch ist es denkbar, dass einzelne oder sämtliche Kammern welche ein Füllmaterial aufweisen, nur teilweise mit dem Füllmaterial ausgefüllt sind bzw. Bereiche auch ohne Füllmaterial im Innern der Kammern übrig bleiben bzw. gas- bzw. luftgefüllt sein können. Das Füllmaterial kann selbst freibleibende bzw. gasgefüllte Kammern aufweisen. Das Füllmaterial bzw. damit die gesamte Innenstruktur kann eine relativ geringe Dichte aufweisen, was bezüglich eines geringen Gesamtgewichts der Vorrichtung bzw. des Verbundmaterials von Vorteil ist.

Besonders bevorzugt ist es, wenn in einer Kammer, wobei die Kammer offen gestaltet ist und zumindest einseitig durch ein Abdeckelement verschlossen ist, das Füllmaterial bis an das eine Abdeckelement heranreicht. Bei ursprünglich offenen Kammern der Innenstruktur, die beidseitig mit gegenüberliegenden Abdeckelementen abgedeckt sind, reicht das Füllmaterial, das eine gewisse Klebe- bzw. Verbindungsfunktion aufweist, vorteilhaft bis an die Abdeckelemente heran. Damit kann erreicht werden, dass über die oben beschriebene Funktion auch eine Verbindungsfunktion der Innenstruktur mit den Abdeckelementen erfüllt wird.

Das Füllmaterial basiert vorteilhafter Weise auf einem Kunststoff- und/oder einem Metallmaterial. Als Füllmaterial kommt beispielsweise ein aushärtbares fließfähiges Schaummaterial beispielsweise auf Basis eines PolyurethanSchaums in Frage.

Neben Kunststoffen, welche standardmäßig als sprühfähige bzw. aushärtende Füllmaterialien existieren und damit vorteilhaft verarbeitbar sind, ist auch ein Füllmaterial mit zumindest einer Metallkomponente denkbar, beispielsweise ein sprühfähiger Schaum auf Aluminiumbasis.

Ein Leichtmetallschaum kann beispielsweise hochstabil und trotzdem leicht sein.

Weiter wird vorgeschlagen, dass die Vorrichtung über Verbindungsmittel an einer Bodenplatte des Fahrzeugs anbringbar ist, wobei mit der Anbringung eine mechanische Stabilitätserhöhung bzw. Versteifung der Bodenplatte einhergeht. Dies ist insbesondere dann vorteilhaft möglich, wenn die Vorrichtung über die Verbindungsmittel an zwei oder mehr Stellen der Bodenplatte, welche voneinander über einen wesentlichen Abstand voneinander beabstandet sind, befestigt ist. Die fest an der Bodenplatte angebrachte Vorrichtung kann beispielsweise insbesondere in der Art einer Verstärkungsrippe an einem flächigen Bauteil wirken.

Schließlich ist es außerdem vorteilhaft, dass die Vorrichtung einen Vertikalabschnitt und einen quer zum Vertikalabschnitt ausgerichteten Querabschnitt umfasst, wobei die Vorrichtung über die Verbindungsmittel an dem Stützabschnitt fixiert ist. Die Vertikal- bzw. Querabschnitte sind insbesondere jeweils als separates Plattenelement ausgebildet, welche zusammensetzbar sind und im fertig zusammengebauten Zustand die Vorrichtung bilden. Die Plattenelemente sind bevorzugt aus dem Verbundmaterial gebildet. Das Zusammensetzen der plattenartigen Elemente kann beispielsweise durch ein Aneinanderstecken mit anschließendem Verkleben erfolgen. Dabei kann der Vertikalabschnitt ein- oder mehrteilig sein genauso wie der Querabschnitt. Eine Möglichkeit besteht darin, dass beispielsweise zwei vertikale Stützen über zumindest einen Querabschnitt miteinander verbunden sind, wobei jeder Querabschnitt und jeder Vertikalabschnitt ein eigenes Bauteil bildet. Es ist aber auch denkbar, dass der Vertikalabschnitt und der Querabschnitt einstückig vorhanden sind bzw. gleichartig aus dem Verbundmaterial zum Beispiel jeweils aus einer dreilagigen Platte bestehen.

Die Erfindung betrifft außerdem eine Bodenplatte eines Fahrzeugs, welche eine der oben genannten Vorrichtungen aufweist. Damit lassen sich an einer Bodenplatte eines Fahrzeugs die oben genannten Vorteile im Hinblick auf die Anordnung eines Personenrückhaltesystems mit einer Sicherheitsgurtanordnung realisieren. Da ein Personenrückhaltesystem bei Fahrzeugen, welche für einen Transport für Personen geeignet ist, vorteilhaft an einer Bodenplatte montiert wird, können Bodenplatten von Fahrzeugen vorteilhaft realisiert werden. Die Bodenplatte kann insbesondere aus dem erfindungsgemäß gebildeten Verbundmaterial komplett oder abschnittsweise aufgebaut sein. So lässt sich die Bodenplatte hochstabil und leicht realisieren.

### Figurenbeschreibung:

Weitere Vorteile und Merkmale der Erfindung sind anhand der in den Figuren gezeigten schematisierten Ausführungsbeispiele der Erfindung näher erläutert.

Im Einzelnen zeigt:
- Figur 1: einen Ausschnitt aus einer erfindungsgemäßen Vorrichtung beim Zusammenbau,

- Figur 2: die Anordnung gemäß Figur 1 in Vollansicht im zusammengebauten Zustand,
- Figur 3: eine alternative Anordnung einer erfindungsgemäßen Vorrichtung,
- Figur 4: eine weitere alternative Anordnung einer erfindungsgemäßen Vorrichtung mit zwei daran beispielhaft angebrachten Dreipunkt-Sicherheitsgurten und
- Figur 5: eine weitere alternative erfindungsgemäße Vorrichtung mit einer weiteren Sicherheitsgurtanordnung in Form von zwei ausgebildeten Dreipunkt-Sicherheitsgurtanordnungen.

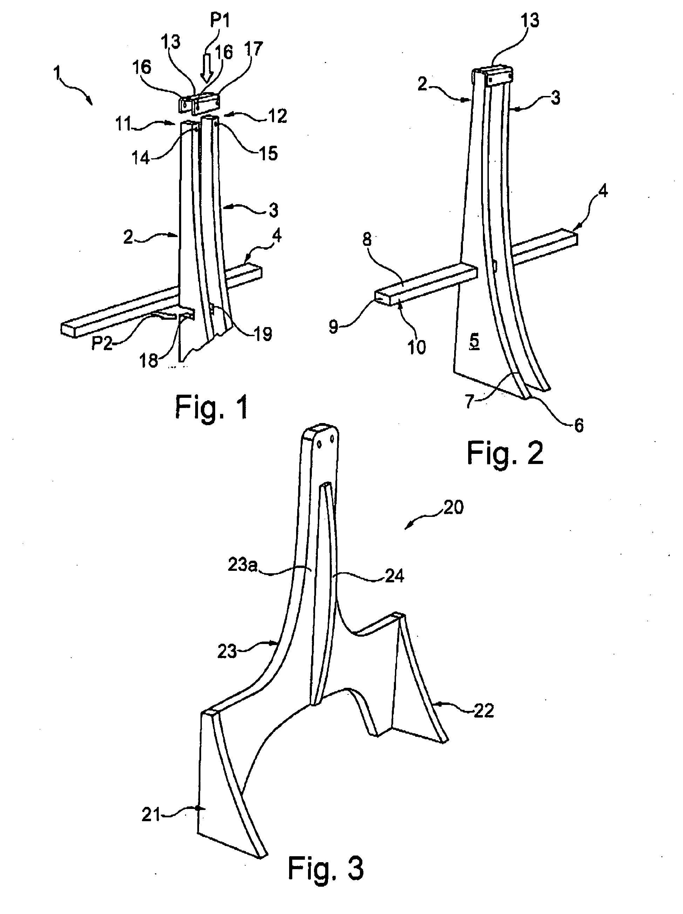

Figur 1 zeigt ein erstes erfindungsgemäßes Ausführungsbeispiel einer Anbringungsvorrichtung für ein Personenrückhaltesystem zur Sicherung von Personen in einem Fahrzeug, wobei die Anbringungsvorrichtung als Gurtgestell 1 ausgebildet ist, um daran eine Sicherheitsgurtanordnung anbringen zu können. Am Gurtgestell 1 ist gemäß den Figuren 1 und 2 keine Sicherheitsgurtanordnung angebracht. Figur 1 zeigt einen oberen Abschnitt des Gurtgestells 1 schematisiert im Zustand kurz vor einer Fertigstellung aus vorgefertigten Einzelbauteilen. Das fertig zusammengebaute Gurtgestell 1 zeigt Figur 2, welches als wesentliche Komponenten zwei identisch ausgebildete Vertikalabschnitte umfasst, welche hier als Stützen 2 und 3 ausgebildet sind. Die Stützen 2, 3 sind unten breiter bzw. werden nach oben hin schmaler. In etwa auf halber vertikaler Höhe der Stützen 2, 3 ist ein die Stützen 2 und 3 verbindender Querabschnitt vorgesehen, welcher als Querelement 4 gestaltet ist. Das Querelement 4 ist von einfacher bzw. lattenförmig Gestalt und steht zu beiden Seiten frei von den Stützen 2, 3 ab. Das Querelement 4 ist rückseitig an den Stützen eingesteckt vorhanden.

Für eine Fixierung bzw. Verbindung von oberen freien Enden 11 bzw. 12 der Stützen 2 bzw. 3 ist ein U-Bügel 13 vorgesehen, wobei der U-Bügel 13 gemäß Pfeil P1 in Figur 1 von oben auf die positionsrichtig zueinander stehenden Stützen 2, 3 aufsetzbar ist. Bei aufgesetztem U-Bügel 13 gemäß Figur 2 fluchten Durchgangsbohrungen 14, 15 in den Stützen 2, 3 mit jeweils zwei in freien Schenkeln des U-Bügels 13 gegenüberliegenden Bohrungen 16 und 17, sodass über die Bohrungen 14 und 16 bzw. die Bohrungen 15 und 17 ein entsprechendes Befestigungsmittel (in Figur 1 und 2 nicht dargestellt) wie beispielsweise ein Bolzen oder eine Schraube einbringbar und mit dieser der U-Bügel 13 fest mit den Stützen 2, 3 verbindbar ist.

Den Zusammenbau des Gurtgestells 1 durch Anbringen des Querelements 4 an den parallel ausgerichteten einzelnen Stützen 2, 3 ist in Figur 1 mittels des Pfeils P2 angedeutet. Demnach wird das quer zur Längserstreckung der Stützen 2, 3 positionierte Querelement 4 in an entsprechender Position in der jeweiligen Stütze 2 und 3 vorhandenen gleichgeformten Einschnitten 18, 19 auf der Rückseite der Stützen 2, 3 eingeschoben, wobei die Einschnitte 18, 19 auf die Querschnittsgröße bzw. -form des Querelements 4 abgestimmt sind. Die Einschnitte 18, 19 können, insbesondere wenn die Stützen 2, 3 aus einem Kartonmaterial gebildet sind, ohne Weiteres nachträglich in die Stützen 2, 3 eingebracht werden.

Im zusammengebauten Zustand des Gurtgestells 1 ist eine hintere Schmalseite des Querelements 4 bündig mit jeweils einer hinteren Schmalseite der beiden Stützen 2, 3. Das Querelement 4 kann an den Stützen 2, 3 im eingesteckten Zustand zum Beispiel durch Kleben fixiert werden.

Sämtliche Bauteile 2, 3 und 4 des Gurtgestells 1 sind aus einem Verbundmaterial gebildet und gleichartig aufgebaut.

Der Grundaufbau des Verbundmaterials, das auch für die Anordnungen aus den weiteren Figuren Verwendung findet, ist beispielhaft anhand Figur 2 erläutert. Demnach umfasst die Stütze 2 bzw. identisch die Stütze 3 zwei Abdeckelemente 5 und 6, zwischen denen über die komplette flächige Erstreckung zu den Innenseiten der Abdeckelemente 5 und 6 eine Innenstruktur vorhanden ist, welche hier z. B. als Wabenstruktur 7 ausgebildet ist. Die Wabenstruktur 7 kann beispielsweise durch gleichartige und gleichmäßig angeordnete offene benachbarte Waben in der Art einer Bienenwabenstruktur ausgebildet sein, wobei die endseitigen offenen Seiten der Kammern der Wabenstruktur 7 jeweils von Innenseiten der Abdeckelemente 5 und 6 abgedeckt werden.

Entsprechend ist auch das Querelement 4 durch zwei Abdeckelemente 8 und 9 und eine dazwischen liegende Wabenstruktur 10 ausgestaltet.

Für eine einheitliche Ausbildung der Außenseite der Stützen 2, 3 bzw. des Querelements 4 können diese an deren Schmalseiten ebenfalls abgedeckt sein mit einem streifenförmigen Element, das aus dem gleichen Material wie die Abdeckelemente 5, 6 bzw. 8, 9 besteht.

Die unten verbreiterten Stützen 2, 3 lassen sich mit einer nicht dargestellten Bodenplatte eines Fahrzeuges, in welchem das Gurtgestell 1 befestigt wird, vorteilhaft befestigen. Die Verbindung kann beispielsweise durch Anschrauben, Ankleben, Anschweißen oder auf sonstige Art und Weise über Verbindungselemente erfolgen. Beispielsweise ist es denkbar, dass an der Bodenplatte nach oben offene U-förmige Bügel fest vorhanden sind, in denen die unteren Schmalseiten der Stützen 2, 3 einsetzbar sind. Durch quer verlaufende Bohrungen in den freien Schenkeln der U-Bügel kann über entsprechend vorhandene Bohrungen in den Stützen 2, 3 eine Schraube, ein Stift oder ein Bolzen und dergleichen eingebracht werden, um die Stützen zu fixieren.

Eine alternative Anordnung eines Gurtgestells 20 zeigt Figur 3. Das Gurtgestell 20 weist eine zweifüßige Anordnung mit einem mittig zwischen den Füßen nach oben sich vertikal erstreckenden Abschnitt auf. Das Gurtgestell 20 ist im Wesentlichen aus vier Bauteilen zusammengesetzt, welche jeweils für sich beispielsweise identisch in der Art eines erfindungsgemäßen Verbundmaterials ausgebildet sind, wie dies bereits zum Ausführungsbeispiel gemäß der Figuren 1 und 2 beschrieben ist.

Konkret besteht das Gurtgestell 20 gemäß Figur 3 aus zwei plattenförmigen Stützfüßen 21, 22, welche bodenbefestigt auf einer nicht dargestellten Bodenplatte eines Fahrzeugs befestigbar sind, wobei die Stützfüße 21, 22 unten breiter sind und nach oben schmäler werden. Quer zwischen den Stützfüßen 21 und 22 ist ein ebenfalls flaches plattenförmiges Mittelteil 23 über seitliche Schmalseiten mit den inneren Hauptflächen der Stützfüße 21, 22 verbunden. Das unten mit einem konkav gebogen ausgeschnittenen Randverlauf versehene Mittelteil 23 weist oben einen schmalen mittig nach oben sich erstreckenden Holmabschnitt 23a auf. Auf einer Hauptfläche des Holmabschnitts 23a steht senkrecht zu dieser parallel zur Längserstreckung des Holmabschnitts 23a ein nach vorne bogenförmig geformtes Rippenteil 24 vor. Das Rippenteil 24 ist gleichartig wie die Teile 21, 22 und 23 aus dem Verbundmaterial gebildet.

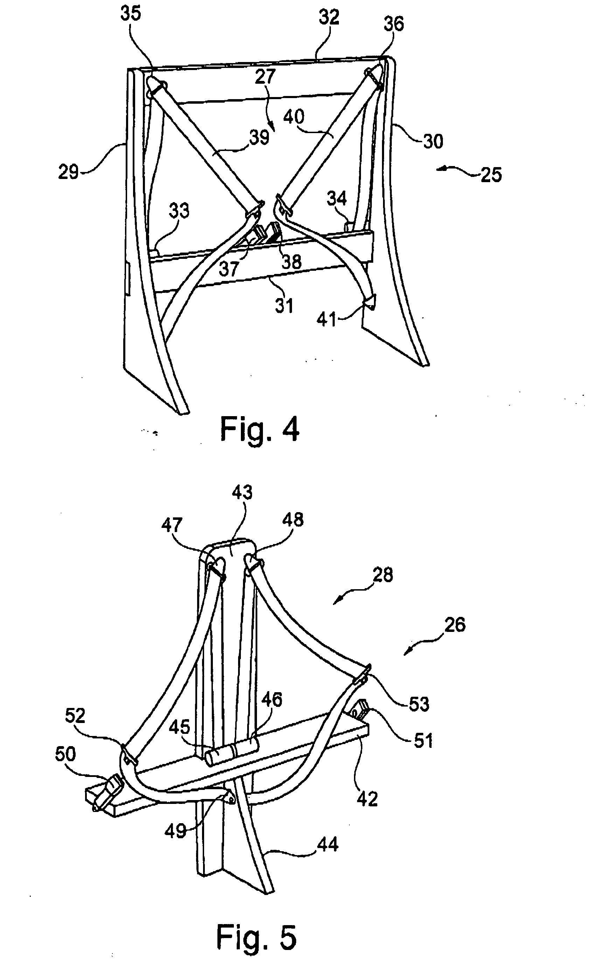

Die weitere Ausführungsbeispiele mit einem Gurtgestell 25 gemäß Figur 4 und einem Gurtgestell 26 gemäß Figur 5 sind jeweils mit einer Sicherheitsgurtanordnung 27 bzw. 28 versehen. Diese Sicherheitsgurtanordnungen 27 bzw. 28 sind jeweils als Dreipunkt-Sicherheitsgurte ausgestaltet, wobei die Gurtgestelle 25, 26 auch vorteilhaft für Hüftgurte einsetzbar sind.

Das Gurtgestell 25 umfasst außen zu beiden Seiten identisch geformte Stützen 29, 30 mit quer dazwischen verlaufenden Querelementen 31, die vertikal versetzt zueinander die Stützen 29, 30 verbinden. Das Querelement 31 ist beispielsweise über entsprechende Einschnitte rückseitig an den Stützen 29, 30 bündig daran eingesteckt. Auch bei dem Gurtgestell 25 sind sämtliche Bauteile bzw. die Stützen 29, 30 und die Querelemente 31, 32 aus dem gleichen Verbundmaterial mit jeweils außenseitig vorhandenen Abdeckelementen und dazwischen liegender Innenstruktur in Kammerform ausgestaltet.

Die Sicherheitsgurtanordnung 27 umfasst an dem Gurtgestell 25 fixierte Gurtaufrollern 33, 34, Gurtumlenker 35, 36 sowie innen etwa mittig am Querelemente 31 positionierte Gurtschlösser 37, 38. Außerdem sind Gurte 39, 40 vorhanden, welche an einem Ende im unteren Bereich der Stützen 29, 30 über Befestigungselemente fixiert sind, von denen nur ein Befestigungselement 41 in Figur 4 ersichtlich ist.

Das Gurtgestell 26 umfasst ebenfalls ein Querelement 42, welches mit seiner Mitte an einem Stützelement 43 fixiert aufgenommen ist. Zwischen dem Querelement 42 und einer ebenfalls nicht dargestellten Bodenplatte, auf welchem das Gurtgestell 26 fixierbar ist, ist ein weiteres rippenartig vorstehendes Stützelement 44 am Stützelement 43 vorhanden. Das Stützelement 44 bildet eine flache obere Schmalseite, an welcher das Querelement 42 sich abstützt.

Das Querelement 42 ist in einer Ausnehmung entsprechend der Dicke des Querelements 42 im Rückenstützenelement 43 eingesteckt. Die als doppelte Dreipunkt-Sicherheitsgurtanordnung ausgebildete Sicherheitsgurtanordnung 28 umfasst im Unterschied zur Sicherheitsgurtanordnung 27 außenliegende Gurtschlösser 50, 51 sowie Gurtaufroller 45, 46, Gurtumlenker 47, 48 und Befestigungselemente, von denen ein Befestigungselement 49 ersichtlich ist. Die Gurtschlösser 50, 51 sind an stirnseitigen Schmalseiten des Querelements 42 fixiert beispielsweise angeschraubt. Zu jedem Gurtschloss 50, 51 gehört ein passendes zungenartiges Einsteckteil 52, 53.

### Bezugszeichenliste:

- 1: Gurtgestell
- 2, 3: Stütze
- 4: Querelement
- 5,6: Abdeckelement
- 7: Wabenstruktur
- 8,9: Abdeckelement
- 10: Wabenstruktur
- 11, 12: Ende
- 13: U-Bügel
- 14, 15: Durchgangsbohrung
- 16, 17: Bohrung
- 18,19: Einschnitt
- 20: Gurtgestell
- 21,22: Stützfuß
- 23: Mittelteil
- 23a: Holmabschnitt
- 24: Rippenteil
- 25: Gurtgestell
- 26: Gurtgestell
- 27: Sicherheitsgurtanordnung
- 28: Sicherheitsgurtanordnung
- 29,30: Stütze
- 31, 32: Querelement
- 33,34: Gurtaufroller
- 35,36: Gurtumlenker
- 37, 38: Gurtschloss
- 39, 40: Gurt
- 41: Befestigungselement
- 42: Querelement
- 43: Stützelement
- 44: Stützelement
- 45, 46: Gurtaufroller
- 47,48: Gurtumlenker
- 49: Befestigungselement
- 50, 51: Gurtschloss
- 52,53: Einsteckteil

## Patentansprüche

1. Vorrichtung zur Anbringung eines zur Sicherung von Personen in einem Fahrzeug ausgebildeten Personenrückhaltesystems mit einer Sicherheitsgurtanordnung (27, 28), wobei die Vorrichtung als ein Basis- bzw. Gurtgestell (1, 20, 25, 26) ausgestaltet ist, das in einem Fahrzeug befestigbar ist und in der Art einer Grundstruktur für eine Sitzanordnung dient, so dass zum Beispiel weitere Elemente der Sitzanordnung daran anbaubar sind, und wobei die Vorrichtung für eine Anbindung an einem Stützabschnitt des Fahrzeugs, insbesondere an einer Bodenplatte, ausgestaltet ist, **dadurch gekennzeichnet, dass** wesentliche Abschnitte der Vorrichtung aus einem plattenartigen Verbundmaterial gebildet sind, das eine mit Kammern gebildete Innenstruktur (7, 10) umfasst, wobei ein flächiges Abdeckelement (5, 6, 8, 9) eine Außenseite des Verbundmaterials bildet und wobei die endseitigen offenen Seiten der Kammern jeweils von Innenseiten der Abdeckelemente (5, 6, 8, 9) abgedeckt sind.

2. Vorrichtung nach Anspruch 1, **dadurch gekennzeichnet, dass** das Verbundmaterial gegenüberliegende Abdeckelemente (5, 6, 8, 9) umfasst, zwischen denen die Innenstruktur (7, 10) angeordnet ist.

3. Vorrichtung nach Anspruch 1 oder 2, **dadurch gekennzeichnet, dass** die Innenstruktur (7, 10) einheitliche Kammern mit definiert vorgegebener Kammerform aufweist.

4. Vorrichtung nach einem der vorhergehenden Ansprüche, **dadurch gekennzeichnet, dass** das Abdeckelement (5, 6, 8, 9) und die Innenstruktur (7, 10) aus dem gleichen Material bestehen.

5. Vorrichtung nach einem der vorhergehenden Ansprüche, **dadurch gekennzeichnet, dass** die Innenstruktur (7, 10) und/oder das Abdeckelement (5, 6, 8, 9) auf einem Zellulosematerial basiert.

6. Vorrichtung nach einem der vorhergehenden Ansprüche, **dadurch gekennzeichnet, dass** die Innenstruktur (7, 10) und/oder das Abdeckelement (5, 6, 8, 9) auf einem Metallmaterial basiert, insbesondere auf einem Leichtmetallmaterial.

7. Vorrichtung nach einem der vorhergehenden Ansprüche, **dadurch gekennzeichnet, dass** die Innenstruktur (7, 10) und/oder das Abdeckelement (5, 6, 8, 9) als ein mit einem Kunststoff getränktes Material ausgebildet ist.

8. Vorrichtung nach einem der vorhergehenden Ansprüche, **dadurch gekennzeichnet, dass** einzelne oder sämtliche Kammern innen ein Füllmaterial aufweisen.

9. Vorrichtung nach einem der vorhergehenden Ansprüche, **dadurch gekennzeichnet, dass** das Füllmaterial auf einem Kunststoff- und/öder einem Metallmaterial basiert.

10. Vorrichtung nach einem der vorhergehenden Ansprüche, **dadurch gekennzeichnet, dass** die Vorrichtung über Verbindungsmittel an einer Bodenplatte des Fahrzeugs anbringbar ist, wobei mit der Anbringung eine mechanische Stabilitätserhöhung bzw. Versteifung der Bodenplatte einhergeht.

11. Vorrichtung nach einem der vorhergehenden Ansprüche, **dadurch gekennzeichnet, dass** die Vorrichtung einen Vertikalabschnitt (2, 3, 21, 22, 29, 30, 43, 44) und einen quer zum Vertikalabschnitt (2, 3, 21, 22, 29, 30, 43, 44) ausgerichteten Querabschnitt (4, 23, 31, 32, 42) umfasst, wobei die Vorrichtung über die Verbindungsmittel an dem Stützabschnitt fixiert ist.

12. Bodenplatte eines Fahrzeugs mit einer Vorrichtung nach einem der vorhergehenden Ansprüche.

## Claims

1. Device for attaching a passenger restraint system with a safety belt (27, 28) designed for securing passengers in a vehicle, in which the device is designed as a base or belt frame (1, 20, 25, 26) which can be secured into a vehicle and is used in the manner of a base structure for a seat arrangement, so that for example additional elements of the seat arrangement can be assembled thereon, and wherein the device is designed for attaching to a support section of the vehicle, in particular to a base plate, **characterised in that** essential sections of the device are formed from a plate-like composite material which has an internal structure (7, 10) formed by chambers, wherein a flat cover element (5, 6, 8, 9) forms an outer side of the composite material and wherein the end open sides of the chambers are covered respectively by inner sides of cover elements (5, 6, 8, 9).

2. Device according to claim 1, **characterised in that** the composite material comprises opposite cover elements (5, 6, 8, 9) between which the internal structure (7, 10) is arranged.

3. Device according to claim 1 or claim 2, **characterised in that** the internal structure (7, 10) comprises uniform chambers with a predefined chamber shape.

4. Device according to any one of the preceding claims, **characterised in that** the cover element (5, 6, 8, 9) and the internal structure (7, 10) are made from the same material.

5. Device according to any one of the preceding claims, **characterised in that** the internal structure (7, 10) and/or the cover element (5, 6, 8, 9) are based on a cellulose material.

6. Device according to any one of the preceding claims, **characterised in that** the internal structure (7, 10) and/or the cover element (5, 6, 8, 9) are based on a metal material, in particular a light metal material.

7. Device according to any one of the preceding claims, **characterised in that** the internal structure (7, 10) and/or the cover element (5, 6, 8, 9) is/are made from a material impregnated with plastic.

8. Device according to any one of the preceding claims, **characterised in that** individual chambers or all of the chambers comprise an internal filler material.

9. Device according to any one of the preceding claims, **characterised in that** the filler material is based on a plastic and/or a metal material.

10. Device according to any one of the preceding claims, **characterised in that** the device can be attached by connecting means onto a base plate of the vehicle, wherein the attachment increases the mechanical stability and reinforces the base plate.

11. Device according to any one of the preceding claims, **characterised in that** the device comprises a vertical section (2, 3, 21, 22, 29, 30, 43, 44) and a transverse section (4, 23, 31, 32, 42) aligned perpendicularly to the vertical section (2, 3, 21, 22, 29, 30, 43, 44), wherein the device is fixed by the connecting means to the support section.

12. Base plate of a vehicle having a device according to any one of the preceding claims.

## Revendications

1. Dispositif pour la mise en place d'un système de retenue de personnes conçu pour sécuriser des personnes dans un véhicule, lequel système de retenue est doté d'un agencement de ceinture de sécurité (27, 28), le dispositif se présentant sous la forme d'une structure de base ou d'une structure de ceintures (1, 20, 25, 26) qui peut être fixée dans un véhicule et qui sert à la façon d'une structure de base à un agencement de siège de sorte que par exemple d'autres éléments de l'agencement de siège peuvent être ajoutés dessus, et le dispositif étant équipé pour un attachement sur une section d'appui du véhicule, notamment une plaque plancher, **caractérisé en ce que** des parties essentielles du dispositif sont formées à partir d'un matériau composite en forme de plaques qui comporte une structure interne (7, 10) formée avec des alvéoles, un élément de recouvrement surfacique (5, 6, 8, 9) formant un côté extérieur du matériau composite, et les côtés d'extrémité ouverts des alvéoles étant recouverts chacun par les faces internes des éléments de recouvrement (5, 6, 8, 9).

2. Dispositif selon la revendication 1, **caractérisé en ce que** le matériau composite comprend des éléments de recouvrement opposés (5, 6, 8, 9) entre lesquels est disposée la structure interne (7, 10).

3. Dispositif selon la revendication 1 ou 2, **caractérisé en ce que** la structure interne (7, 10) présente des alvéoles uniformes avec une forme d'alvéole prédéfinie.

4. Dispositif selon l'une des revendications précédentes, **caractérisé en ce que** l'élément de recouvrement (5, 6, 8, 9) et la structure interne (7, 10) sont constitués du même matériau.

5. Dispositif selon l'une des revendications précédentes, **caractérisé en ce que** la structure interne (7, 10) et/ou l'élément de recouvrement (5, 6, 8, 9) sont à base d'un matériau cellulosique.

6. Dispositif selon l'une des revendications précédentes, **caractérisé en ce que** la structure interne (7, 10) et/ou l'élément de recouvrement (5, 6, 8, 9) sont à base d'un matériau métallique, notamment un matériau en métal léger.

7. Dispositif selon l'une des revendications précédentes, **caractérisé en ce que** la structure interne (7, 10) et/ou l'élément de recouvrement (5, 6, 8, 9) sont conçus comme un matériau imprégné de matière plastique.

8. Dispositif selon l'une des revendications précédentes, **caractérisé en ce que** certaines des alvéoles ou toutes les alvéoles présentent à l'intérieur un matériau de remplissage.

9. Dispositif selon l'une des revendications précédentes, **caractérisé en ce que** le matériau de remplissage est à base d'une matière plastique et/ou d'une matière métallique.

10. Dispositif selon l'une des revendications précédentes, **caractérisé en ce que** le dispositif peut être monté à l'aide de moyens de liaison sur une plaque plancher du véhicule, le montage s'accompagnant d'une augmentation de la stabilité mécanique ou d'une rigidification de la plaque plancher.

11. Dispositif selon l'une des revendications précédentes, **caractérisé en ce que** le dispositif inclut une section verticale (2, 3, 21, 22, 29, 30, 43, 44) et une section transversale (4, 23, 31, 32, 42) dirigée transversalement à la section verticale (2, 3, 21, 22, 29, 30, 43, 44), le dispositif étant fixé à l'aide des moyens de liaison à la section d'appui.

12. Plaque plancher d'un véhicule avec un dispositif selon l'une des revendications précédentes.
